# FASCICULE DE BREVET EUROPEEN

(11) **EP 0 890 403 B1**
(45) Date de publication et mention de la délivrance du brevet: **26.11.2003**
(21) Numéro de dépôt: 98108511.1
(22) Date de dépôt: 11.05.1998
(51) Int. Cl.: B23B 51/00, B23B 51/02, A61C 1/00

(54) **Foret avec goujures constituées de parties en hélice et de parties rectilignes**
Bohrer mit Spannuten mit abwechselnd wendelförmigen und geraden Abschnitten
Drill with flutes having alternating helical and straight sections

(30) Priorité: 15.05.1997 CH 113797
(43) Date de publication de la demande: 13.01.1999
(73) Titulaire: Rouiller, Jean-Claude, 2300 La Chaux-de-Fonds (CH)
(72) Inventeur: Berlin, Pierre, 2300 La Chaux-de-Fonds (CH)
(74) Mandataire: Gresset, Jean

(56) Documents cités:
- EP-A- 0 726 065
- EP-A- 0 790 092
- DE-A- 4 307 553

## Description

La présente invention concerne un outil selon préambule de la revendication 1 (voir, par exemple, EP 0 726 065 A).

Il est connu des vrilles actionnées à la main, permettant de pratiquer des avant-trous par exemple dans le bois. Il est également connu, pour le perçage du trou proprement dit, des forets ou mèches comportant un ou plusieurs évidements périphériques, dont la forme générale est une hélice, et qui prennent naissance à l'extrémité pénétrante de l'outil. Une diminution continue de l'angle d'hélice suivant la longueur de l'outil est connue du document EP 0 790 092 A. Ces évidements périphériques en forme générale d'hélice, ci-après appelés goujures, servent d'une part à évacuer les copeaux enlevés par les parties coupantes de l'outil. Ils servent d'autre part, lorsque l'outil est au moins partiellement conique, à élargir le trou ou avant-trou en participant, par leur profil coupant, à l'enlèvement de matière. L'utilisateur avisé d'un foret prend garde de modérer l'avance de son outil pour éviter le phénomène indésirable de vissage, dans lequel l'avance de l'outil est simplement déterminée par la vitesse de rotation et le pas de l'hélice. Un début perceptible de vissage doit être corrigé par un arrêt ou une inversion de l'avance, et, si l'outil à tendance à se bloquer, à une diminution, un arrêt ou une inversion de la vitesse de rotation. Un blocage peut entraîner une casse de l'outil.

La propension au vissage est d'autant plus forte que l'outil présente une forme générale conique et non cylindrique.

Dans le cas particulier de la chirurgie dentaire, l'alésage des canaux radiculaires doit présenter un profil conique, en vue de l'obturation qui suivra. En conséquence, les outils utilisés ont une propension tellement forte au vissage qu'ils sont surtout utilisés en limage axial manuel. Ils sont d'un maniement délicat, car la casse d'un tel outil est très préjudiciable.

L'alésage canalaire avec entraînement en rotation continue à faible vitesse des instruments est depuis peu préconisé. Ce procédé a pour avantage principal de ne pas déformer la trajectoire naturelle d'un canal dentaire, tout en effectuant son élargissement.

On a tenté, dans cette technique, d'éliminer la tendance au vissage en émoussant les angles de coupe des goujures. Mais non seulement l'efficacité d'enlèvement de matière est moindre, avec un échauffement indésirable, mais il subsiste une certaine tendance au vissage.

Il a été proposé des remèdes aux difficultés prédécrites, consistant à réaliser l'alésage en plusieurs tronçons, chacun à l'aide d'un outil différent. Ceci présente l'inconvénient de multiplier le nombre d'outils, et d'annuler le gain de temps par rapport à la méthode par limage axial.

Le document EP 0 330 107 enseigne, dans le but d'éviter des à-coups de torsion lors de l'engagement de l'outil, de faire varier certains paramètres géométriques d'un outil conique muni de goujures. Outre que le problème à résoudre est différent, les faibles valeurs envisagées ne peuvent remédier à la tendance au vissage.

Il reste donc à trouver un outil d'enlèvement de matière qui présente, en plus d'une possibilité de vissage nulle, un pouvoir de coupe latérale maintenu, capable de réaliser un alésage en une seule passe, et ce pour toutes sortes d'applications industrielles.

L'invention propose d'arriver à ce résultat par les moyens décrits dans la partie caractérisante de la revendication 1.

Plus spécifiquement, il est proposé d'adopter, pour la ou les différents évidements périphériques, ci-après appelés goujures, un profil qui, tout en permettant l'évacuation de la matière enlevée par l'extrémité pénétrante et le profil de ces goujures, ne se traduit pas par un effet d'avance sous l'action de la rotation de l'outil. La forme de cette goujure peut être définie par son angle d'hélice. On entend par angle d'hélice l'angle que fait une tangente au bord de la goujure avec une génératrice du cylindre circonscrit au point considéré, comme définit par exemple dans l'ouvrage intitulé La Machine-Outil, Dunod, Paris 1953.

Certaines parties du profil de l'outil présentent une hélice à droite, l'angle d'hélice étant positif, comme un foret classique. D'autres au contraire présentent un angle d'hélice nul, la goujure étant rectiligne et parallèle à l'axe de l'outil, ou un angle d'hélice négatif qui compense la tendance au vissage des parties avec angle d'hélice à droite.

En d'autres termes, l'angle d'hélice varie en fonction de la valeur de z, mesurée sur l'axe de rotation de l'outil. L'outil présentera ainsi, selon les résultats recherchés, une succession de parties dans lesquelles l'angle d'hélice est positif, séparées par des parties dans lesquelles l'angle d'hélice est aussi positif, mais de valeur inférieure, nul ou négatif. Il est cependant nécessaire que sur toute la longueur de l'outil, l'angle d'hélice moyen soit positif, sinon la matière enlevée ne sera pas évacuée par le mouvement de rotation de l'outil.

R est le rayon de la section primitive de l'outil avant taillage de la ou des goujures. Il est lui aussi fonction de z, et généralement nul pour l'extrémité pénétrante de l'outil où z = 0.

Dans les portions où R croît en fonction de z, l'outil a la forme générale d'un tronc de cône. Ces portions présentent une tendance au vissage accrue.

L'invention s'applique à des valeurs de R quelconques (mais jamais nulles) entre z > 0 et z = z max.

L'expérience montre qu'une alternance régulière de parties où l'angle d'hélice est positif et de parties où l'angle d'hélice est nul, procure une bonne résistance en vissage tout en gardant un bon pouvoir de coupe et d'évacuation de la matière enlevée.

Une telle goujure est donc composée d'une succession alternée de segments en hélice et de segments rectilignes.

Dans une forme particulière de réalisation de l'invention, la taille alternée des goujures précédemment décrite est appliquée aux instruments d'alésage de canaux radiculaires en chirurgie dentaire.

Ces instruments sont destinés à l'élargissement des canaux radiculaires. Ils présentent un grand nombre de formes, cylindrique ou conique, à une, deux, trois ou quatre goujures, à arêtes de coupe vives et coupantes ou au contraire non coupantes. Dans ce dernier cas, on rencontre des outils avec témoins concentriques ou avec arêtes émoussées. L'invention s'applique avec succès à toutes ces formes de réalisation.

Dans une forme particulière de réalisation de l'invention, la taille alternée des goujurés précédemment décrite est appliquée aux forets et fraises de tous types utilisés en dentisterie et en chirurgie osseuse.

Ces types de forets comprennent spécialement :
- des forets dits du genre Gate;
- des forets dits du genre Peeso;
- des forets cylindriques.

Ces types de fraises comprennent notamment :
- des fraises dites pour pivot;
- des fraises à os dites surtaillées;
- des fraises dites fissures.

L'invention sera mieux comprise à la lumière de la description détaillée qui va suivre, en référence au dessin annexé dans lequel
- la figure 1 montre un exemple de taille alternée sur un foret cylindrique;
- les figures 2a et 2b montrent en coupe des exemples d'exécution avec arêtes de coupe vives et coupantes;
- les figures 3a et 3b montrent d'autres exemples d'exécution avec arêtes non coupantes et témoins concentriques;
- la figure 3c montre un exemple d'exécution avec arête émoussée;
- la figure 4 montre un exemple en exécution conique;
- les figures 5a à 5f montrent des exemples d'exécution sur diverses formes de fraises.

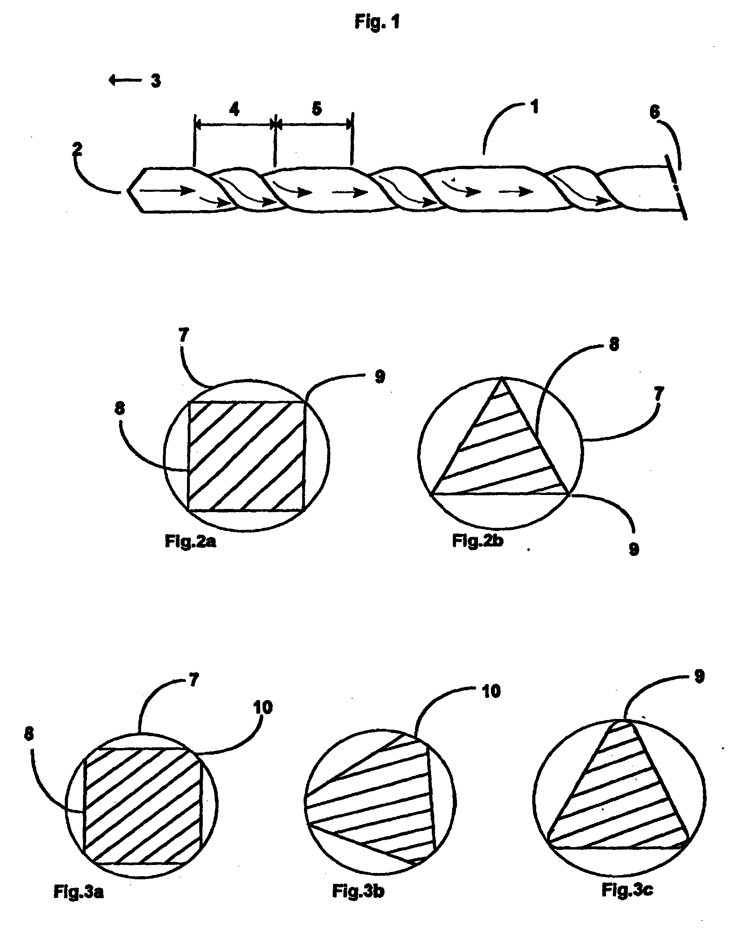

Sur la figure 1, l'outil 1 est muni d'une extrémité pénétrante 2, et tourne sur un axe de rotation. La flèche 3 représente le sens de l'avance. Le profil des goujures de l'outil 1 est constitué par des parties 4 en hélice, dans lesquelles l'angle d'hélice est positif, et des parties 5 rectilignes, c'est-à-dire où l'angle a d'hélice est nul..

Les parties en hélice 4 permettent de façon connue de faire progresser la matière enlevée vers l'extrémité 6 opposée à l'extrémité pénétrante 2.

Les parties rectilignes 5 ont pour fonction de réduire la tendance au vissage de l'outil 1. Cette tendance est ainsi rendue suffisamment faible pour permettre l'entraînement continu en rotation de l'outil 1.

Dans le cas où les conditions d'alésage l'exigent, il est possible de remplacer les parties rectilignes 5 par des parties où l'angle d'hélice s'inverse par rapport aux parties 4. L'angle d'hélice est alors négatif. Il est cependant avantageux de ne pas avoir une valeur trop négative car il en résulterait des difficultés d'évacuation de la matière enlevée.

Les parties 5 peuvent aussi présenter un angle d'hélice positif, mais de valeur plus faible que les parties 4. De cette façon, la matière enlevée est acheminée vers l'extrémité 6 de manière plus régulière.

La figure 2a montre, en coupe perpendiculaire à l'axe reliant les extrémités 2 et 6, un exemple d'exécution de l'outil 1, cet exemple comprenant quatre arêtes 9 de coupe vives et tranchantes, déterminées par quatre goujures 8 pratiquées selon l'invention. Ces quatre goujures 8 sont aménagées dans une forme primitive d'outil, représentée par un cercle 7 dont le rayon, appelé précédemment R, est une fonction g de la distance z du plan de coupe de la figure 2a à l'extrémité pénétrante 2.

Dans un repère de coordonnées lié à l'outil, le point courant 9 de l'arête de coupe a pour abscisse z cos a, pour ordonnée z sin a, l'angle a étant l'angle d'hélice. La trace de l'extrémité pénétrante 2 sur la figure 2a n'est autre que le centre du cercle 7.

L'angle a est l'angle d'hélice de l'une quelconque des goujures 8. Dans l'art antérieur, il est constant en fonction de z. Selon l'invention, il est une fonction f non linéaire de z, la seule contrainte étant que l'angle d'hélice moyen à l'extrémité 6 de l'outil 1, soit positif. Ceci est propice à l'évacuation de la matière enlevée.

La goujure 8 est réalisée de manière connue par exemple par meulage. Dans l'exemple représenté, la meule a un diamètre très supérieur à R ce qui donne au profil de la goujure 8, dans le plan de coupe de la figure 2a, un aspect rectiligne.

La figure 2b montre un exemple similaire à celui de la figure 2a, mais à trois goujures au lieu de quatre. Mis à part le nombre différent de goujures, toutes les explications restent valables.

Les arêtes de coupe 9 des figures 2a et 2b sont vives et tranchantes. Ceci permet particulièrement, dans le cas où la forme primitive de l'outil 1 est conique, d'attribuer à ces arêtes 9 une fonction d'enlèvement de matière.

Les figures 3a et 3b illustrent la possibilité de réaliser des arêtes non coupantes 10, dites avec témoin concentrique. Dans cette forme de réalisation, les goujures 8 sont, de manière connue en soi, aménagées moins profondément dans le cercle primitif 7, ce qui les rend moins coupantes.

La figure 3c illustre une autre façon, connue en soi, de rendre des arêtes 9 moins coupantes, par émoussage. Seul un exemple à trois goujures a été représenté à la figure 3a.

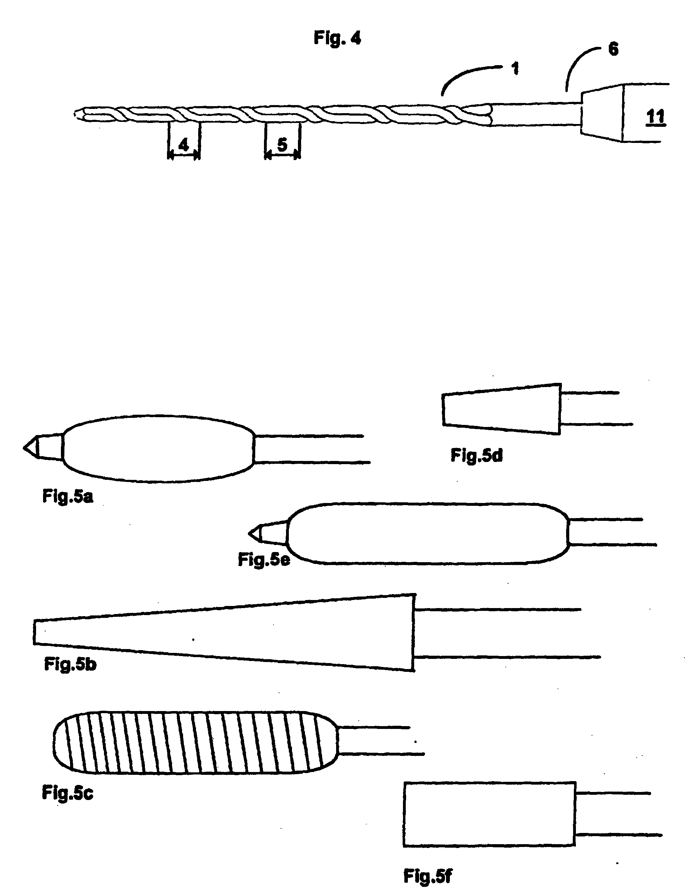

La figure 4 montre un exemple de réalisation en exécution conique, dans un instrument dentaire destiné à l'alésage de canaux radiculaires.

L'outil 1, est serré par son extrémité 6 dans un mandrin 11, lui-même entraîné en rotation par des moyens connus en soi.

L'outil 1 est souple, ce qui lui permet de suivre les canaux radiculaires. Les parties 4 en hélice alternent avec des parties 5 rectilignes, la forme primitive de l'outil 1 étant légèrement conique. La pointe arrondie, dite pointe mousse, permet d'améliorer le guidage de l'outil dans le canal radiculaire.

L'alternance des parties 4 et 5 permet de réduire la tendance au vissage de l'outil 1 et ainsi d'éviter les blocages, sources de ruptures d'outils.

La figure 5a représente la forme primitive d'une fraise du genre "Gates". Le rayon R d'une telle forme, mesuré dans un plan de coupe perpendiculaire à l'axe de symétrie, est une fonction g relativement complexe de la distance z de ce plan de coupe à l'extrémité pénétrante 2. La propension au vissage vient de toutes les parties où cette fonction g est croissante.

Dans la figure 5b, représentant une fraise conique pour pivot dentaire, le rayon R est linéairement croissant en fonction de z. Là aussi, l'angle d'hélice a varie en fonction de z, avec une succession de parties 4 en hélice et de parties 5 rectilignes ou quasi rectilignes.

La figure 5c représente une fraise chirurgicale dite "à os". Les hachures rappellent qu'une telle fraise est communément surtaillée, c'est-à-dire présente une ou plusieurs premières goujures, d'angle d'hélice constant, aménagées sur sa partie active de forme générale cylindrique. La taille alternée selon l'invention, consistant en une ou plusieurs goujures d'angle d'hélice variable, vient en superposition de ces premières goujures.

La figure 5d représente une fraise dentaire conique. Les mêmes commentaires que pour la figure 5b s'appliquent à cette forme de réalisation, qui se distingue par ses dimensions réduites.

La figure 5e illustre une fraise dentaire du genre "Peeso", à titre d'exemple de variation de profil d'outil auquel peut s'appliquer l'invention.

La figure 5f, montrant une fraise dentaire cylindrique, est un exemple de réalisation, dans lequel non seulement l'extrémité pénétrante 2 de l'outil présente un rayon R non nul pour z = 0, mais où ce rayon R reste constant pour une plage importante de valeurs de z.

Les exemples des figures 5a à 5f ne constituent qu'un échantillon des possibilités d'application de l'invention à tous les cas où la tendance au vissage doit être éliminée.

## Revendications

1. Outil (1) à application médicale pour l'enlèvement de matière, comportant une extrémité pénétrante (2) et destiné à être mis en rotation autour d'un axe passant par ladite extrémité (2), et des moyens d'évacuation de la matière enlevée consistant en au moins une goujure (8) qui présente un profil défini par une longueur z égale à la distance comprise entre le point du profil considéré et ladite extrémité, et un angle d'hélice a, **caractérisé en ce qu'**il comporte, en outre, répartis axialement, une alternance de premières parties (4) dans lesquelles a est positif, pour définir une structure en hélice permettant d'évacuer ladite matière, et de deuxièmes parties (5) dans lesquelles a est plus faible que dans les premières parties, nul ou négatif, pour réduire la tendance au vissage et assurer l'évacuation de ladite matière.

2. Utilisation de l'outil selon la revendication 1, **caractérisé en ce qu'**il est destiné à un alésage assurant un élargissement des canaux radiculaires.

3. Utilisation de l'outil selon la revendication 1, **caractérisé en ce qu'**il est utilisé en dentisterie ou en chirurgie osseuse.

4. Utilisation de l'outil selon la revendication 3, **caractérisé en ce qu'**il constitue une fraise ou un foret du genre Gates, ou Peeso, ou une fraise dentaire pour pivot, ou une fraise à os surtaillée, ou une fraise dentaire conique ou cylindrique.

5. Outil selon la revendication 1, **caractérisé en ce que**, dans les premières parties (4), a est positif, et dans les deuxièmes parties (5), a est nul.

## Patentansprüche

1. Medizintechnisches Instrument (1) zum Entfernen von Material
- mit einem Eindringende (2) und ausgelegt für ein in Drehung Versetzen um eine durch dieses Ende (2) hindurchgehende Achse, und
- mit Mitteln zur Abfuhr des entfernten Materials, welche aus zumindest einer Spannut (8) bestehen, die ein Profil, das durch eine dem Abstand zwischen dem in Betracht gezogenen Profilpunkt und diesem Ende entsprechende Länge z definiert ist, und einen Steigungswinkel a hat,
**dadurch gekennzeichnet, dass** das Instrument ferner axial verteilt abwechselnd
- erste Abschnitte (4), in denen a zur Definition einer Wendelstruktur positiv ist, um das Abführen des Materials zu ermöglichen, sowie
- zweite Abschnitte (5) aufweist, in denen a kleiner als in den ersten Abschnitten, Null oder negativ ist, um die Festschraubtendenz zu verringern und um die Abfuhr des Materials zu gewährleisten.

2. Verwendung des Instruments nach Anspruch 1, **dadurch gekennzeichnet, dass** es für eine Bohrung ausgelegt ist und eine Ausweitung von Wurzelkanälen gewährleistet.

3. Verwendung des Instruments nach Anspruch 1, **dadurch gekennzeichnet, dass** es als ein zahnärztliches oder knochenchirurgisches Instrument genutzt wird.

4. Verwendung des Instruments nach Anspruch 3, **dadurch gekennzeichnet, dass** es ein Gates- oder Peeso-Fräser oder -Bohrer oder ein Zahnfräser für einen Zahnstift oder ein überschnittener Knochenfräser oder ein konischer oder zylindrischer Zahnfräser ist.

5. Instrument nach Anspruch 1, **dadurch gekennzeichnet, dass** a in den ersten Abschnitten (4) positiv und in den zweiten Abschnitten (5) Null ist.

## Claims

1. Tool (1) for medical application for removing matter, including a penetrating tip (1) and intended to be rotated about an axis passing through said tip (2), and means for discharging the matter removed consisting of at least one flute (8), which has a profile defined by a length z equal to the distance comprised between the point of the profile concerned and said tip, and a helix angle a, **characterized in that** it further includes, axially distributed, an alternation of first portions (4) in which a is positive, to define a helical structure for discharging said matter, and second portions (5) in which a is smaller than in the first portions, zero or negative, to reduce the screwing tendency and to ensure discharge of said matter.

2. Use of the tool according to claim 1, **characterized in that** it is intended for a bore for enlarging root canals.

3. Use of the tool according to claim 1, **characterized in that** it is used in dentistry or in bone surgery.

4. Use of the tool according to claim 3, **characterized in that** it forms a Gates or Peeso type bur or drill, or a dental bur for a filling screw, or an overcut bone dental bur or a conical or cylindrical dental bur.

5. Tool according to claim 1, **characterized in that**, in the first portions (4), a is positive, and in the second portions (5), a is zero.
